# EUROPÄISCHE PATENTANMELDUNG

(11) **EP 4 749 174 A1**
(43) Veröffentlichungstag der Anmeldung: **27.05.2026**
(21) Anmeldenummer: 25218352.0
(22) Anmeldetag: 25.11.2025
(51) Int. Cl.: F16N 31/00, B21D 51/26, B21D 37/18

(54) **RUNDLÄUFER-VORRICHTUNG UND VERFAHREN ZUM ABDICHTEN DER RUNDLÄUFER-VORRICHTUNG**

(30) Priorität: 26.11.2024 DE 102024134757
(71) Anmelder: Krones AG, 93073 Neutraubling (DE)
(72) Erfinder: SCHOENFELDER, Markus, 93073 Neutraubling (DE); BRAUN, Franz, 93073 Neutraubling (DE)
(74) Vertreter: v. Bezold & Partner Patentanwälte - PartG mbB

(57) **Zusammenfassung**

Die Erfindung betrifft u.a. eine Rundläufer-Vorrichtung (10) für eine Behälterbehandlungsanlage. Die Rundläufer-Vorrichtung (10) weist einen Tragrahmen (14) auf, der eine Aussparung (16) und einen ringförmigen Schmierstoffkanal (26), der die Aussparung (16) umgibt, aufweist. Die Rundläufer-Vorrichtung (10) weist eine Rotorplatte (18) auf, die drehbar zum Tragrahmen (14) in der Aussparung (16) angeordnet ist und einen ringförmigen Kragen (36) aufweist, der von oben in den Schmierstoffkanal (26) eintaucht.

## Beschreibung

### Technisches Gebiet

Die Erfindung betrifft eine Rundläufer-Vorrichtung für eine Behälterbehandlungsanlage. Die Erfindung betrifft ferner ein Verfahren zum Abdichten einer Rundläufer-Vorrichtung.

### Technischer Hintergrund

Rundläufer-Vorrichtungen, auch Rundläufermaschinen genannt, sind Maschinen, die bspw. in Behälterbehandlungsanlagen, wie Getränkeabfüllanlagen, verwendet werden. Diese Maschinen sind so konzipiert, dass sie Behälter, wie Flaschen oder Dosen, auf einer Kreisbahn bewegen und dabei optional behandeln können. Ein typisches Merkmal einer Rundläufermaschine ist, dass sie um eine vertikale Achse rotiert.

Beispielsweise kann ein Rundläufer-Dosenverschließer in der Getränke- und Lebensmittelindustrie verwendet werden, um Dosen effizient und schnell zu verschließen. Diese Maschinen arbeiten in einem kontinuierlichen Kreislauf und sind so konzipiert, dass sie mehrere Dosen gleichzeitig verarbeiten können. Die Maschine kann um eine zentrale Achse rotieren, wobei die Dosen in einer kreisförmigen Anordnung durch verschiedene Behandlungsschritte geführt werden. Hierzu können das Aufbringen und Bördeln des Deckels zählen, um einen luftdichten Verschluss zu gewährleisten.

Mit gestiegenen Hygieneanforderungen kann ein regelmäßiger Bedarf zur Reinigung der Rundläufer-Vorrichtungen bestehen. Beim Reinigen können Reinigungsflüssigkeitsstrahlen auf Flächen der Rundläufer-Vorrichtung treffen.

Nachteilig an bekannten Rundläufer-Vorrichtungen, insbesondere Rundläufer-Dosenverschließern, kann sein, dass diese nur eine unzureichende Abdichtung gegenüber der Reinigungsflüssigkeit aufweisen. Entsprechend besteht ein Risiko dafür, dass die Reinigungsflüssigkeit durch Spalte usw. in einen Schmierstoffraum der Rundläufer-Vorrichtung eindringt und dort den Schmierstoff verunreinigt und damit dessen Wirkung herabsetzt.

Andererseits soll auch kein Schmierstoff aus dem Schmierstoffraum in den Produktionsraum / Behälterbehandlungsraum gelangen.

Ferner können bei herkömmlich eingesetzten Dichtungssystemen, wie Wellendichtringen, X-Ringen und O-Ringen, bei hohen Drehzahlen der Karusselle negative Effekte durch die Dichtung hervortreten. Hier ist vor allem ein hoher Wärmeeintrag zu nennen. Dies wiederum führt zu Abrieb und dazu, dass das jeweilige Dichtsystem an sich relativ schnell verschleißt und damit wieder undicht wird.

Der Erfindung liegt die Aufgabe zu Grunde, eine verbesserte Abdichtung für eine Rundläufer-Vorrichtung zu schaffen, mit der zumindest einige der oben genannten Nachteile überwunden werden können. Bevorzugt soll die verbesserte Abdichtung insbesondere bei Reinigungsarbeiten eine sichere Abdichtung eines Schmierstoffraums der Rundläufer-Vorrichtung ermöglichen, sodass keine Reinigungsflüssigkeit in den Schmierstoffraum eindringt. Bevorzugt soll die Abdichtung bei Rundläufer-Verschließvorrichtungen, insbesondere bei Rundläufer-Dosenverschließvorrichtungen, einsetzbar sein.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine Rundläufer-Vorrichtung, vorzugsweise Rundläufer-Verschließvorrichtung, bevorzugt Rundläufer-Dosenverschließvorrichtung, für eine Behälterbehandlungsanlage. Die Rundläufer-Vorrichtung weist einen Tragrahmen auf, der eine (z. B. zentrale) Aussparung und einen ringförmigen Schmierstoffkanal, der die Aussparung umgibt, aufweist. Die Rundläufer-Vorrichtung weist eine Rotorplatte auf, die drehbar zum Tragrahmen in der Aussparung angeordnet ist und einen ringförmigen Kragen aufweist, der von oben in den Schmierstoffkanal eintaucht, vorzugsweise zum Abdichten eines Spalts zwischen der Rotorplatte und dem Tragrahmen mittels in dem Schmierstoffkanal aufgenommenen Schmierstoffs.

Vorteilhaft wird durch den in den mit Schmierstoff gefüllten Schmierstoffkanal eintauchende Kragen der Rotorplatte ein Schmierstoffschloss (z. B. Schmierölschloss) realisiert, das ein Eindringen von bspw. Reinigungsmedium in den Tragrahmen durch einen Spalt zwischen der Rotorplatte und dem Tragrahmen verhindern kann. Die Dichtung ist vorteilhaft reibungsarm, dauerhaft und hermetisch dicht. Als Teil eines Dichtsystems kann das Schmierstoffschloss vorteilhalt eine Abdichtung zwischen einem Behälterbehandlungsraum (Produktionsraum/Hygieneraum) und einem Schmierstoffraum verbessern. Vorteilhaft kann das Dichtsystem für eine komplette Dichtheit sorgen, sodass kein Schmierstoff in den Behälterbehandlungsraum gelangt und kein Wasser und Wasserdampf sowie Reinigungsmittel in den Schmierstoff (-kreislauf).

In einem Ausführungsbeispiel ist der Kragen der Rotorplatte an einem Außenumfang der Rotorplatte und/oder an einer Unterseite der Rotorplatte angeordnet. Vorteilhaft kann damit das Schmierstoffschloss in einem radial äußeren Bereich der Rotorplatte angeordnet sein.

In einem weiteren Ausführungsbeispiel sind der Tragrahmen und die Rotorplatte, vorzugsweise direkt, oberhalb oder unterhalb von einem Behälterbehandlungsraum der Rundläufer-Vorrichtung angeordnet, und/oder der Tragrahmen und die Rotorplatte sind Komponenten eines, vorzugsweise höhenverstellbaren, (z. B. Verschließer-) Oberteils oder (z. B. Verschließer-) Unterteils der Rundläufer-Vorrichtung. Vorteilhaft kann die Abdichtung somit einen Bereich unterhalb der Rotorplatte, in dem Behälter behandelt werden und Reinigungsmittel angewendete werden, und einen Bereich innerhalb des Tragrahmens, in dem Schmierfluid zirkuliert, voneinander trennen.

In einer Ausführungsform haust der Tragrahmen einen Schmierstoffraum zum Aufnehmen von Schmierstoffsprühnebel ein. Der Schmierstoffraum ist oberhalb von dem Schmierstoffkanal angeordnet und erstreckt sich bis hin zu dem Schmierstoffkanal zum Zuführen des Schmierstoffs aus dem Schmierstoffraum zu dem Schmierstoffkanal. Vorteilhaft kann der Schmierstoffkanal so zum Gewährleisten der Dichtfunktion durch eine Maschinenumlaufschmierung immer voll gehalten werden. Der Schmierstoffkanal kann durch Fliehkraft zwar teilweise auslaufen. Vorteilhaft erfolgt aber eine dauerhafte Nachspeisung von Schmierstoff aus dem Schmierstoffraum.

In einer weiteren Ausführungsform weist der Tragrahmen einen ringförmigen weiteren Schmierstoffkanal auf, der den Schmierstoffkanal, vorzugsweise koaxial, umgibt und optional einen Einlass eines Schmierstoffablaufs zum Abführen von Schmierstoff aus dem weiteren Schmierstoffkanal aufweist. Bevorzugt können der weitere Schmierstoffkanal und der Schmierstoffkanal (z. B. nur) durch eine ringförmige Wand voneinander getrennt sein, vorzugweise mit einer Wandhöhe ≥ 5 mm und/oder ≤ 20 mm, bevorzugt ca. 10 mm. Vorteilhaft kann der Schmierstoff aus dem weiteren Schmierstoffkanal, der Schmierstoff bspw. durch Überschwappen aus dem Schmierstoffkanal empfängt, über den Schmierstoffablauf zu einem Schmierstoffreservoir (z. B. unter der Rundläufer-Vorrichtung) fließen, dort aufbereitet werden und wieder zurück in den Schmierstoffraum gepumpt werden. Vorteilhaft kann die Wand dafür sorgen, dass der Schmierstoffkanal auch ohne Nachspeisung stets genügend voll bleibt, um eine hermetische Abdichtung zu gewährleisten.

In einer Ausführungsvariante ist die Rotorplatte um eine Hauptdrehachse der Rundläufer-Vorrichtung drehbar. Vorzugsweise kann die Rotorplatte mit Behandlungseinrichtungen zum Behandeln der Behälter und/oder mit Behälterhaltern verbunden sein zum Drehen der Behandlungseinrichtungen und/oder der Behälterhalter um die Hauptdrehachse der Rundläufer-Vorrichtung. Bevorzugt können die Behandlungseinrichtungen Verschließwerkzeuge, besonders bevorzugt Bördelverschließwerkzeuge, aufweisen. Besonders vorteilhaft kann die vorgeschlagene Dichttechnik somit bei einem Dosenverschließer angewendet werden.

In einer weiteren Ausführungsvariante weist die Rundläufer-Vorrichtung ferner einen Dichtring auf, der bspw. radial innen von dem Kragen der Rotorplatte und/oder dem Schmierstoffkanal des Tragrahmens angeordnet ist und zwischen der Rotorplatte, vorzugsweise einer Unterseite der Rotorplatte, und dem Tragrahmen abdichtet. Vorzugsweise kann der Dichtring eine Dichtlippe aufweisen, die die Rotorplatte kontaktiert, vorzugsweise von unten. Auch möglich ist, dass der Dichtring in der Rotorplatte aufgenommen ist und bspw. eine Dichtlippe aufweist, die den Tragrahmen, z. B. dessen Kragen, kontaktiert. Vorteilhaft kann die Ergänzung des Dichtrings die Dichtwirkung weiter verbessern. Der Dichtring kann als schleifende Dichtung vorteilhaft verhindern, dass Medien (z. B. Reinigungsmedien) aus dem Behälterbehandlungsraum überhaupt das Schmierstoffschloss erreichen und dass Schmierstoff in den Behälterbehandlungsraum gelangt.

In einem Ausführungsbeispiel weist die Rotorplatte unterseitig eine ringförmige Ausnehmung auf. Vorzugsweise kann die Ausnehmung außenumfangsseitig von dem Kragen der Rotorplatte begrenzt sein. Vorzugsweise kann der Tragrahmen einen ringförmigen Kragen aufweisen, der in die Ausnehmung hineinragt, z. B. von unten, und vorzugsweise den Schmierstoffkanal innenumfangsseitig begrenzt. Vorteilhaft kann somit ein Dichtlabyrinth zwischen den Flächen der Ausnehmung und des Kragens des Tragrahmens realisiert werden.

In einem weiteren Ausführungsbeispiel ist der Dichtring in der Ausnehmung angeordnet und dichtet zwischen der Rotorplatte und dem Kragen des Tragrahmens ab. Optional kann der Dichtring an einem oberen Ende des Kragens des Tragrahmens angeordnet und vorzugsweise abgestützt sein. Vorteilhaft kann der Dichtring somit Medien vom Eindringen in den Tragrahmen abhalten, wenn diese in bereits deutlich reduzierter Menge das Dichtlabyrinth zwischen Ausnehmung und Kragen des Tragrahmens überwinden konnten.

In einer Ausführungsform ist mindestens eines erfüllt von:
- eine (z. B. ringförmige) Bodenfläche der Ausnehmung weist (z. B. im Querschnitt) eine Tropfkantenkontur zum Unterbrechen einer fliehkraftbedingten Tropfenbewegung radial nach außen auf;
- eine (z. B. ringförmige) Innenumfangsfläche der Ausnehmung weist (z. B. im Querschnitt) eine Wellenbrecherkontur zum Zurückwerfen von (z. B. strahlförmig) von unten in die Ausnehmung eindringender Flüssigkeit auf;
- ein Übergang zwischen einer (z. B. ringförmigen) Innenumfangsfläche der Ausnehmung und einer (z. B. ringförmigen) Bodenfläche der Ausnehmung weist eine Vertiefung (z. B. Hinterschnitt) zum Verringern eines Kapillareffekts zwischen einer Innenumfangsfläche der Ausnehmung und dem Kragen des Tragrahmens auf; und
- eine an die Ausnehmung radial innen angrenzende Unterseitenfläche der Rotorplatte weist (z. B. im Querschnitt) eine Tropfkantenkontur zum Unterbrechen einer fliehkraftbedingten Tropfenbewegung radial nach außen zu der Ausnehmung auf.

Vorteilhaft kann damit ein besonders wirksames Labyrinth zum Schutz vor Medien aus dem Behälterbehandlungsraum realisiert werden.

In einer weiteren Ausführungsform weist die Rundläufer-Vorrichtung ferner (mindestens) ein Entlüftungselement, vorzugsweise Entlüftungsschraube, auf, das in einem mit der Ausnehmung verbundenen Durchgangsloch der Rotorplatte zum Abbauen von Druck in der Ausnehmung lösbar angeordnet ist. Vorzugsweise kann ferner mindestens eines erfüllt sein von:
- das Entlüftungselement ist lösbar in dem Durchgangsloch eingeschraubt;
- das Durchgangsloch öffnet sich in einem Bereich der Ausnehmung zwischen dem Kragen des Tragrahmens und dem Kragen der Rotorplatte; und
- das Durchgangsloch öffnet sich in einer Oberseite oder Außenumfangsseite der Rotorplatte.

Vorteilhaft kann durch das Entlüftungselement ein bspw. durch die Drehung der Rotorplatte oder Druckbeaufschlagung im Behälterbehandlungsraum (z. B. Reinraum) bewirkter Druckanstieg in der Ausnehmung abgebaut werden. Vorteilhaft kann damit eine Dichtwirkung zwischen der Rotorplatte und der Tragrahmen verbessert werden. Vorteilhaft kann durch das Entlüftungselement der Schmierstoff durch Rotation in radialer Richtung nach außen gelangen. Dies ist bevorzugt nur möglich, wenn dabei Luft in den ansonsten geschlossenen Raum gelangen kann.

In einer Ausführungsvariante weist die Rundläufer-Vorrichtung ferner (mindestens) eine Dichtbaugruppe aufweisend ein Hülsenteil und eine Dichtschraube auf. Vorzugsweise kann das Hülsenteil auf einer Oberseite der Rotorplatte, vorzugsweise abgedichtet zu der Oberseite der Rotorplatte, angeordnet sein und sich in einen Durchlass der Rotorplatte hineinerstrecken, vorzugsweise eingeschraubt in den Durchlass. Bevorzugt kann sich der Durchlass von der Oberseite der Rotorplatte zu der Ausnehmung erstrecken, vorzugsweise in einen Bereich der Ausnehmung zwischen einer Innenumfangsfläche der Ausnehmung und dem Kragen des Tragrahmens. Optional kann die Dichtschraube abgedichtet und lösbar in das Hülsenteil eingeschraubt sein. Vorteilhaft kann durch Lösen der Dichtbaugruppe, z. B. im Rahmen einer Inspektion, ein Zugang zu der Ausnehmung ermöglicht werden, um diese zu inspizieren oder ggf. gezielt zu reinigen. Die abgedichtete Anordnung mit Hülsenteil und Dichtschraube kann vorteilhaft verhindern, dass noch auf der Oberseite der Rotorplatte stehendes Schmierfluid beim Entfernen der Dichtschraube in die Ausnehmung fließt.

Ein weiterer Aspekt betrifft eine Behälterbehandlungsanlage (z. B. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann die Rundläufer-Vorrichtung wie hierin offenbart aufweisen. Die Behälterbehandlungsanlage kann beispielsweise eine Getränkeabfüllanlage sein.

Beispielsweise können die Behälter als Flaschen, Dosen, Kanister, Kartons, Flakons, Tuben usw. ausgeführt sein.

Ein weiterer Aspekt betrifft ein Verfahren zum Abdichten einer Rundläufer-Vorrichtung, vorzugsweise wie hierin offenbart, oder einer Rundläufer-Verschließvorrichtung oder einer Rundläufer-Dosenverschließvorrichtung. Das Verfahren weist auf: Blockieren eines Fluidpfads (z. B. von zwischen einem Behälterbehandlungsraum der Rundläufer-Vorrichtung und einem Schmierstoffraum eines Tragrahmens) durch einen Spalt zwischen einer Rotorplatte der Rundläufer-Vorrichtung und einem Tragrahmen der Rundläufer-Vorrichtung mittels eines ringförmigen Kragens der Rotorplatte, der in einen mit Schmierstoff gefüllten ringförmigen Schmierstoffkanal des Tragrahmens eintaucht. Vorteilhaft können mit dem Verfahren die gleichen Vorteile erzielt werden, die bereits unter Bezugnahme auf die Rundläufer-Vorrichtung erläutert wurden. Selbiges gilt für die untenstehend beschriebenen bevorzugten Beispiele des Verfahrens.

In einem Ausführungsbeispiel weist das Verfahren ferner mindestens eines auf von:
- Reinigen einer Unterseite der Rotorplatte mit einem Reinigungsmedium (z. B in Strahlform), wobei ein Eindringen des Reinigungsmediums in einen von dem Tragrahmen eingehausten Schmierstoffraum mittels des blockierten Fluidpfads verhindert wird;
- Nachfüllen, vorzugsweise kontinuierliches Nachfüllen, des Schmierstoffs in dem Schmierstoffkanal aus einem Schmierstoffsprühnebel aus einem von dem Tragrahmen eingehausten Schmierstoffraum, der oberhalb von dem Schmierstoffkanal angeordnet ist und sich bis hin zu dem Schmierstoffkanal erstreckt; und
- Abdichten des Spalts mit einem Dichtring, vorzugsweise mit einer Dichtlippe des Dichtrings in Kontakt mit der Rotorplatte.

In einem weiteren Ausführungsbeispiel weist die Rotorplatte unterseitig eine ringförmige Ausnehmung auf, wobei vorzugsweise die Ausnehmung außenumfangsseitig von dem ringförmigen Kragen der Rotorplatte begrenzt ist, und der Tragrahmen weist einen ringförmigen Kragen auf, der in die Ausnehmung hineinragt und vorzugsweise den Schmierstoffkanal innenumfangsseitig begrenzt. Das Verfahren weist ferner mindestens eines auf von: Abbauen von Druck in der Ausnehmung mittels (mindestens) eines Entlüftungselements, vorzugsweise Entlüftungsschraube; und Verringern eines Fluidflusses durch die Ausnehmung mittels mindestens eines von:
- eine Tropfkantenkontur an einer (z. B. ringförmigen) Bodenfläche der Ausnehmung, die eine fliehkraftbedingte Tropfenbewegung radial nach außen unterbricht;
- eine Wellenbrecherkontur an einer (z. B. ringförmigen) Innenumfangsfläche der Ausnehmung, die (z. B. strahlförmig) von unten in die Ausnehmung eindringende Flüssigkeit zurückwirft;
- eine Vertiefung (z. B. Hinterschnitt) an einem Übergang zwischen einer (z. B. ringförmigen) Innenumfangsfläche der Ausnehmung und einer (z. B. ringförmigen) Bodenfläche der Ausnehmung, die einen Kapillareffekt zwischen der Innenumfangsfläche der Ausnehmung und dem Kragen des Tragrahmens verringert; und
- eine Tropfkantenkontur an einer an die Ausnehmung radial innen angrenzenden Unterseitenfläche der Rotorplatte, die eine fliehkraftbedingte Tropfenbewegung radial nach außen zu der Ausnehmung unterbricht.

Die zuvor beschriebenen bevorzugten Ausführungsformen und Merkmale der Erfindung sind beliebig miteinander kombinierbar.

Es versteht sich, dass alle hierin bezüglich der Rundläufer-Vorrichtung offenbarten Merkmale auch für das Verfahren offenbart und beanspruchbar sind, und umgekehrt.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Schnittansicht einer Rundläufer-Vorrichtung gemäß einem Ausführungsbeispiel; und
- Figur 2: eine Schnittansicht eines Dichtsystems der beispielhaften Rundläufer-Vorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

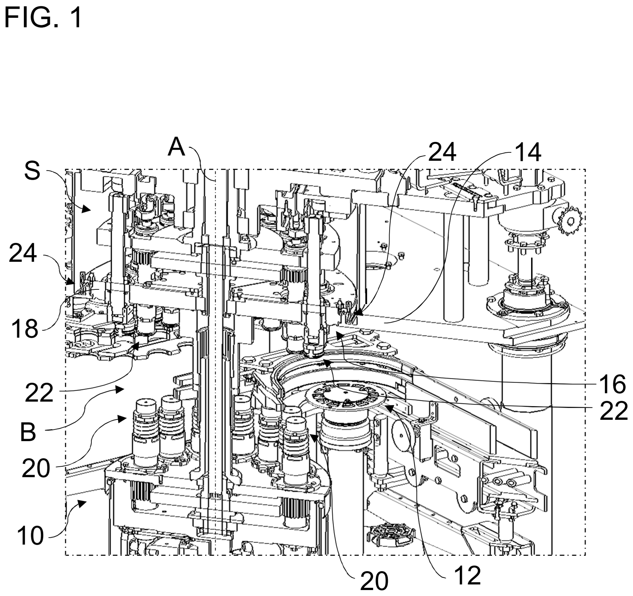

Die Figur 1 zeigt einen Ausschnitt einer Rundläufer-Vorrichtung 10. Bevorzugt kann die Rundläufer-Vorrichtung 10 in einer Behälterbehandlungsanlage, z. B. einer Getränkeabfüllanlage, umfasst sein. Beispielsweise kann die Rundläufer-Vorrichtung 10 die Behälter an einen Transportstern 12 der Behälterbehandlungsanlage übergeben.

Vorzugsweise kann die Rundläufer-Vorrichtung 10 eine Rundläufer-Behandlungsvorrichtung zum Behandeln von Behältern, z. B. eine Rundläufer-Verschließvorrichtung zum Verschließen von mit einem Füllgut gefüllten Behältern, sein. Bevorzugt können die Behälter Dosen, z. B. Getränkedosen, sein. Entsprechend kann die Rundläufer-Vorrichtung 10 besonders bevorzugt eine Rundläufer-Dosenverschließvorrichtung sein, wie in Figur 1 beispielhaft dargestellt ist.

Beispielsweise kann behälterstromaufwärts von der Rundläufer-Verschließvorrichtung eine Füllvorrichtung zum Füllen der Behälter mit einem, vorzugsweise flüssigen oder pastösen, Füllgut angeordnet sein. Die gefüllten Behälter können bspw. mit einem Transporteur zu der Rundläufer-Verschließvorrichtung transportiert und dann von der Rundläufer-Verschließvorrichtung verschlossen werden.

Die Rundläufer-Vorrichtung 10 weist einen Tragrahmen 14 und eine Rotorplatte 18 auf.

Der Tragrahmen 14 kann auch als Tragkonstruktion oder Maschinenbett bezeichnet werden. Der Tragrahmen 14 ist bevorzugt stationär. Der Tragrahmen 14 weist eine Aussparung 16 auf. Die Aussparung 16 kann bevorzugt zentral bezüglich einer Hauptdrehachse A der Rundläufer-Vorrichtung 10 sein. Die Aussparung 16 kann bevorzugt kreisrund sein.

Der Tragrahmen 14 kann vorzugsweise einen Schmierstoffraum S einhausen. Mittels einer Schmierstoffversorgung kann Schmierstoff, z. B. Schmieröl, in den Schmierstoffraum S zugeführt werden.

In dem Schmierstoffraum S kann bevorzugt ein Schmierstoffsprühnebel, z. B. Schmierölsprühnebel, aufgenommen sein. Mittels des Schmierstoffs im Schmierstoffraum S können Lager, Buchsen usw. im Schmierstoffraum S oder angrenzend daran geschmiert werden.

Die Rotorplatte 18 ist um eine Hauptdrehachse A der Rundläufer-Vorrichtung 10 drehbar. Somit ist die Rotorplatte 18 auch relativ zum Tragrahmen 14 drehbar. Beispielsweise kann die Rotorplatte 18 zum Drehen um eine Hauptdrehachse A der Rundläufer-Vorrichtung 10 angetrieben werden. Die Rotorplatte 18 ist in der Aussparung 16 angeordnet. Bevorzugt kann die Rotorplatte 18 den Schmierstoffraum S nach unten hin begrenzen.

Die Rotorplatte 18 kann bspw. Teil einer sogenannten Steuertrommel / eines Steuerkäfigs einer Rundläufer-Verschließvorrichtung sein.

Bevorzugt können der Tragrahmen 14 und die Rotorplatte 18 Komponenten eines, vorzugsweise höhenverstellbaren, (z. B. Verschließer-) Oberteils der Rundläufer-Vorrichtung 10 sein, wie in Figur 1 beispielhaft dargestellt ist.

Der Tragrahmen 14 und die Rotorplatte 18 können direkt oberhalb von einem Behälterbehandlungsraum B der Rundläufer-Vorrichtung 10 angeordnet sein. Der Behälterbehandlungsraum B kann im Betrieb der Rundläufer-Vorrichtung 10 von den Behältern passiert werden. In dem Behälterbehandlungsraum B können die Behälter von der Rundläufer-Vorrichtung 10 behandelt werden.

Beispielsweise kann die Rundläufer-Vorrichtung 10 mehrere Behälterstationen zum gleichzeitigen oder zeitlich überlappenden Behandeln (z. B. Verschließen) mehrerer Behälter im Behälterbehandlungsraum B aufweisen. Bevorzugt können die Behälterstationen verteilt um einen Umfang eines Karussells der Rundläufer-Vorrichtung 10 herum angeordnet sein, z. B. an einem Karusselloberteil und/oder an einem Karussellunterteil der Rundläufer-Vorrichtung 10.

Beispielsweise können die Behälterstationen jeweils einen Behälterhalter 20 und eine Behandlungseinrichtung 22 aufweisen.

Die Behälterhalter 20 können die Behälter halten und/oder tragen. Beispielsweise können die Behälterhalter 20 jeweils einen Behälter halten und/oder tragen. Beispielweise können die Behälterhalter 20 die Behälter bodenseitig abstützen. Optional können die Behälterhalter 20 die Behälter um eine (z. B. Hoch-) Achse des jeweiligen Behälterhalters 20 drehen, z. B. um eine Behandlung mittels der Behandlungseinrichtung 22 der jeweiligen Behälterstation zu unterstützen. Die Behälterhalter 20 können bspw. an einem drehbaren Karussellunterteil der Rundläufer-Vorrichtung 10 zum Drehen um die Hauptachse A der Rundläufer-Vorrichtung 10 angeordnet sein.

Die Behandlungseinrichtungen 22 können die von den Behälterhaltern 20 gehaltenen Behälter im Behälterbehandlungsraum B behandeln. Beispielsweise können die Behandlungseinrichtungen 22 jeweils einen Behälter behandeln.

Beispielsweise können die Behandlungseinrichtungen 22 Verschließwerkzeuge zum Verschließen der Behälter im Behälterbehandlungsraum B aufweisen. Die Verschließwerkezuge können bspw. dazu ausgebildet sein, als Dosen ausgeführte Behälter zu verschließen. Entsprechend können die Verschließwerkzeuge bspw. Bördelverschließwerkzeuge, z. B. mit Bördelrolle(n) und Gegenhalter, aufweisen, wie beispielhaft in Figur 1 dargestellt ist. Bördelverschließwerkzeuge können bspw. einen Bördelrand einer Dose zum Halten eines Dosendeckels umbördeln, z. B. zunächst mit einer Vorfalz mittels eines ersten Bördelverschließwerkzeugs und anschließend einer Endfalz mittels eines zweiten Bördelverschließwerkzeugs.

Die Behandlungseinrichtungen 22 können an einem drehbaren Karusselloberteil der Rundläufer-Vorrichtung 10 zum Drehen um eine Hauptachse A der Rundläufer-Vorrichtung 10 angeordnet sein. Beispielsweise können die Behandlungseinrichtungen 22 zumindest teilweise mit der Rotorplatte 18 zum Drehen um die Hauptdrehachse A verbunden sein. Bevorzugt können die Bördelverschließwerkzeuge mit den Bördelrollen (z. B. für Vorfalz und Endfalz) mit der Rotorplatte 18 zum Drehen um die Hauptdrehachse A verbunden sein.

Beispielsweise können die Behandlungseinrichtungen 22 sich zumindest teilweise durch Durchlässe in der Rotorplatte 18 aus dem Schmierstoffraum S in den Behälterbehandlungsraum B erstrecken, bevorzugt abgedichtet zu der Rotorplatte 18.

Zum Abdichten zwischen der Rotorplatte 18 und dem Tragrahmen 14 ist ein Dichtsystem 24 vorgesehen. Das Dichtsystem 24 kann zwischen der Rotorplatte 18 und dem Tragrahmen 14 und damit zwischen dem Behälterbehandlungsraum B und dem Schmierstoffraum S abdichten.

Es versteht sich, dass die Rundläufer-Vorrichtung 10 - je nach Konfiguration - neben der Rotorplatte 18 weitere oder alternative Rotorplatten aufweisen, wie bereits in Figur 1 dargestellt ist (siehe Oberteil und Unterteil der Vorrichtung 10). Die hierin vorgeschlagene Technik bezüglich des Dichtsystems 24, also der Abdichtung zwischen der Rotorplatte 18 und dem Tragrahmen 14, kann auf alle denkbaren Rotorplatte-Tragrahmen-Kombinationen einer Rundläufer-Vorrichtung angewendet werden und ist nicht auf die hierin beschriebene Anwendung auf die Rotorplatte 18 oder auf eine Anwendung bei einer Dosenverschließvorrichtung beschränkt, auch wenn diese Anwendungen besonders bevorzugt sind.

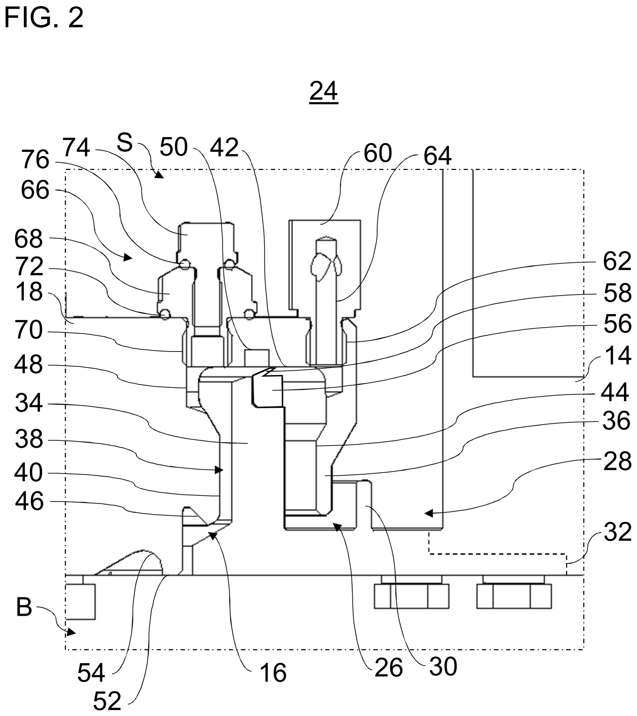

Die Figur 2 zeigt das Dichtsystem 24 in größerem Detail.

Das Dichtsystem 24 kann durch eine spezielle Formgebung des Tragrahmens 14 und der Rotorplatte 18 gebildet sein, wie nachfolgend im Detail beschrieben ist. Optional kann das Dichtsystem 24 ferner einen Dichtring 56, mindestens ein Entlüftungselement 60 und/oder mindestens eine Dichtbaugruppe 66 aufweisen.

Der Tragrahmen 14 weist einen ringförmigen Schmierstoffkanal 26 auf. Optional kann der Tragrahmen 14 bspw. noch einen weiteren ringförmigen Schmierstoffkanal 28 und/oder einen ringförmigen Kragen (Bund) 34 aufweisen.

Der Schmierstoffkanal 26 umgibt die Aussparung 16. Bevorzugt kann der Schmierstoffkanal 26 sich auf einer Kreisbahn erstrecken, durch deren Zentrum die Hauptdrehachse A der Rundläufer-Vorrichtung 10 (siehe Figur 1) verläuft.

Der Schmierstoffkanal 26 ist im Betrieb mit Schmierstoff, vorzugsweise Schmieröl, gefüllt.

Beispielsweise kann der von dem Tragrahmen 14 eingehauste Schmierstoffraum S oberhalb von dem Schmierstoffkanal 26 angeordnet sein. Der Schmierstoffraum S kann sich nach unten bis hin zu dem Schmierstoffkanal 26 erstrecken. Aus dem Schmierstoffraum S kann Schmierstoff aus bspw. Schmierstoffsprühnebel zu dem Schmierstoffkanal 26 zum Füllen des Schmierstoffkanals 26 mit Schmierstoff zugeführt werden.

Bevorzugt kann der weitere Schmierstoffkanal 28 sich wiederum auf einer Kreisbahn erstrecken, durch deren Zentrum die Hauptdrehachse A der Rundläufer-Vorrichtung 10 (siehe Figur 1) verläuft. Der weitere Schmierstoffkanal 28 kann den Schmierstoffkanal 26, vorzugsweise koaxial, umgeben.

Der weitere Schmierstoffkanal 28 kann außenliegend zu dem Schmierstoffkanal 26 angeordnet sein. Entsprechend kann der weitere Schmierstoffkanal 28 auch als ein äußerer Schmierstoffkanal bezeichnet werden, und der Schmierstoffkanal 26 kann als ein innerer Schmierstoffkanal bezeichnet werden.

Bevorzugt grenzen die Schmierstoffkanäle 26 und 28 direkt aneinander an. Beispielsweise können die Schmierstoffkanäle 26 und 28 durch eine ringförmige Wand 30 voneinander getrennt sein. Vorzugsweise kann die Wand 30 (und damit bevorzugt auch der Schmierstoffkanal 26) eine Höhe ≥ 5 mm und ≤ 20 mm, bevorzugt ca. 10 mm, aufweisen. Die Wand 30 kann den Schmierstoffkanal 26 außenumfangsseitig begrenzen. Die Wand 30 kann den weiteren Schmierstoffkanal 28 innenumfangsseitig begrenzen.

Ein Einlass eines Schmierstoffablaufs 32 (nur schematisch in Figur 2 dargestellt) kann mit dem weiteren Schmierstoffkanal 28 verbunden sein. Beispielsweise kann der Einlass in einer Bodenfläche oder einer Außenumfangsfläche des weiteren Schmierstoffkanals 28 angeordnet sein. Durch den Schmierstoffablauf kann Schmierstoff aus dem weiteren Schmierstoffkanal 28 abgeführt werden, z. B. hin zu einem Schmierstoffrezirkulationspfad, in dem der Schmierstoff bspw. gefiltert und zurück zu dem Schmierstoffraum S und/oder anderen Schmierstoffräumen der Rundläufer-Vorrichtung 10 (siehe Figur 1) gefördert, z. B. gepumpt, werden kann.

Es ist bspw. auch möglich, dass es keinen weiteren Schmierstoffkanal 28 gibt. Stattdessen kann bspw. ein Überlauf in oder an dem Schmierstoffkanal 26 angeordnet sein. Am Überlauf kann der Einlass des Schmierstoffablaufs 32 angeordnet sein. Vorteilhaft könnte mit dem Überlauf auch der Schmierstoffstand, z. B. Ölstand, eingestellt werden.

Der weitere Schmierstoffkanal 28 kann aus dem Schmierstoffkanal 26 überschwappenden Schmierstoff aufnehmen. Im Betrieb kann bei Drehung der Rotorplatte 18 der Schmierstoff aus dem Schmierstoffkanal 26 teilweise über die Wand 30 zu dem weiteren Schmierstoffkanal 28 überschwappen.

Der von dem Tragrahmen 14 eingehauste Schmierstoffraum S kann auch oberhalb von dem weiteren Schmierstoffkanal 28 angeordnet sein. Der Schmierstoffraum S kann sich nach unten bis hin zu dem weiteren Schmierstoffkanal 28 erstrecken. Aus dem Schmierstoffraum S kann Schmierstoff aus bspw. Schmierstoffsprühnebel zu dem weiteren Schmierstoffkanal 28 zum Ablassen über den Schmierstoffablauf 32 zugeführt werden.

Der Kragen 34 des Tragrahmens 14 kann sich auf einer Kreisbahn erstrecken, durch deren Zentrum die Hauptdrehachse A der Rundläufer-Vorrichtung 10 (siehe Figur 1) verläuft. Der Kragen 34 kann vorzugsweise an einem Innenumfang des Tragrahmens 14 angeordnet sein. Der Kragen 34 ist vorzugsweise vollständig umlaufend.

Beispielsweise kann der Kragen 34 die Aussparung 16 außenumfangsseitig begrenzen. Beispielsweise kann der Kragen 34 den Schmierstoffkanal 26 innenumfangsseitig begrenzen.

Bevorzugt kann sich der Kragen 34 nach oben erstrecken. Der Kragen 34 kann vorzugsweise höher als die Wand 30 sein.

Die Rotorplatte 18 weist einen ringförmigen Kragen (Bund) 36 auf. Der Kragen 36 kann auch als Schwert bezeichnet werden. Optional kann die Rotorplatte 18 ferner eine ringförmige Ausnehmung 38 aufweisen.

Der Kragen 36 der Rotorplatte 18 kann sich auf einer Kreisbahn erstrecken, durch deren Zentrum die Hauptdrehachse A der Rundläufer-Vorrichtung 10 (siehe Figur 1) verläuft. Der Kragen 36 ist vorzugsweise an einem Außenumfang der Rotorplatte 18 angeordnet. Der Kragen 36 kann an einer Unterseite der Rotorplatte 18 angeordnet sein. Der Kragen 36 ist vorzugsweise vollständig umlaufend.

Bevorzugt verlaufen der Kragen 36 der Rotorplatte 18 und der Schmierstoffkanal 26 des Tragrahmens 14 koaxial bezüglich der Hauptdrehachse A der Rundläufer-Vorrichtung 10 (siehe Figur 1).

Der Kragen 36 taucht von oben in den Schmierstoffkanal 26 und damit in den Schmierstoff im Schmierstoffkanal 26 ein. Der Kragen 36 kann beabstandet zu einer Bodenfläche, einer Innenumfangsfläche und einer Außenumfangsfläche des Schmierstoffkanals 26 in den Schmierstoffkanal 26 eintauchen.

Durch das Eintauchen des Kragens 36 in den Schmierstoffkanal 26 und den darin aufgenommenen Schmierstoff kann ein Spalt zwischen der Rotorplatte 18 und dem Tragrahmen 14 abgedichtet werden. Der Spalt kann funktionsbedingt vorhanden sein, da die Rotorplatte 18 drehbar zum Tragrahmen 14 ist. Der Kragen 36, der Schmierstoffkanal 26 und der darin aufgenommene Schmierstoff können als ein Schmierstoffschloss, vorzugsweise Ölschloss, zusammenwirken. Entsprechend kann das Schmierstoffschloss zwischen dem Schmierstoffraum S und dem Behälterbehandlungsraum B abdichten.

Der in den mit Schmierstoff gefüllten Schmierstoffkanal 26 eintauchende Kragen 36 der Rotorplatte 18 kann somit wirksam einen Fluidpfad (z. B. für Reinigungsflüssigkeit) durch den Spalt zwischen der Rotorplatte 18 und dem Tragrahmen 14 blockieren. Beim Reinigen u.a. der Unterseite der Rotorplatte 18 mit einem Reinigungsmedium, das bspw. auf die Unterseite gesprüht wird, kann somit mittels des blockierten Fluidpfads ein Eindringen des Reinigungsmediums in den Schmierstoffraum S verhindert werden.

Die Ausnehmung 38 kann an einer Unterseite der Rotorplatte 18 angeordnet sein. Die Ausnehmung 38 kann außenumfangsseitig von dem Kragen 36 der Rotorplatte 18 begrenzt sein.

Die Ausnehmung 38 kann im Wesentlichen einen U-förmigen Querschnitt, bevorzugt orientiert als umgedrehtes U, aufweisen. Der U-förmige Querschnitt der Ausnehmung 38 kann durch eine Innenumfangsfläche 40, eine Bodenfläche 42 und eine Außenumfangsfläche 44 gebildet sein. Bevorzugt kann die Außenumfangsfläche 44 der Ausnehmung 38 von einer Innenumfangsfläche des Kragens 36 der Rotorplatte 18 gebildet sein. Die Bodenfläche 42 kann in eine Richtung nach unten gewandt sein. Die Bodenfläche 42 kann auch als eine obenliegende Bodenfläche 42 bezeichnet werden.

Der Kragen 34 des Tragrahmens 14 kann in die Ausnehmung 38 von unten eintauchen bzw. sich in die Ausnehmung 38 hineinerstrecken. Der Kragen 34 des Tragrahmens 14 kann beabstandet zu der Innenumfangsfläche 40, der Bodenfläche 42 und der Außenumfangsfläche 44 der Ausnehmung 38 sein.

Bevorzugt weist die Innenumfangsfläche 40 der Ausnehmung 38 im Querschnitt eine Wellenbrecherkontur 46 auf. Die Wellenbrecherkontur 46 kann so geformt sein, dass sie von unten in die Ausnehmung 38 entlang der Innenumfangsfläche 40 eindringende Flüssigkeit nach unten zurückwerfen kann. Beispielsweise kann die Wellenbrecherkontur 46 durch einen nach innen und unten gerichteten Vorsprung an der Innenumfangsfläche 40 gebildet sein. Beispielsweise kann die Wellenbrecherkontur 46 im Wesentlichen eine umgedrehte U-Form oder eine umgedrehte V-Form aufweisen. Die Wellenbrecherkontur 46 ist bevorzugt eine geschlossene Kontur, also eine um die Innenumfangsfläche 40 vollständig umlaufende Kontur.

Ein Übergang zwischen der Innenumfangsfläche 40 und der Bodenfläche 42 der Ausnehmung 38 weist bevorzugt eine Vertiefung 48 auf. Die Vertiefung 48 kann bspw. als eine Nut ausgeführt sein. Bevorzugt kann die Vertiefung 48 als ein Hinterschnitt am Übergang zwischen der Innenumfangsfläche 40 und der Bodenfläche 42 geformt sein. Die Vertiefung 48 kann zum Verringern eines Kapillareffekts zwischen der Innenumfangsfläche 40 der Ausnehmung 38 und dem Kragen 34 des Tragrahmens 14 dienen. Entsprechend kann die Vertiefung 48 bspw. als eine sogenannte Kapillarnut bezeichnet werden.

Bevorzugt weist die Bodenfläche 42 der Ausnehmung 38 im Querschnitt eine Tropfkantenkontur (Abtropfkantenkontur) 50 auf. Die Tropfkantenkontur 50 kann so geformt sein, dass sie eine fliehkraftbedingte Tropfenbewegung entlang der Bodenfläche 42 radial nach außen unterbricht. Beispielsweise kann die Tropfkantenkontur 50 einen stufenförmigen Absatz in der Bodenfläche 42 bilden. Die Tropfkantenkontur 50 ist bevorzugt eine geschlossene Kontur, also eine um die Bodenfläche 42 vollständig umlaufende Kontur.

Vorzugsweise kann eine Unterseitenfläche 52 der Rotorplatte 18, die radial innen an die Ausnehmung 38 angrenzt, im Querschnitt eine Tropfkantenkontur 54 aufweisen. Die Tropfkantenkontur 54 kann so geformt sein, dass sie eine fliehkraftbedingte Tropfenbewegung entlang der Unterseitenfläche 52 radial nach außen hin zu der Ausnehmung 38 unterbricht. Beispielsweise kann die Tropfkantenkontur 54 einen stufenförmigen Absatz in der Unterseitenfläche 52 bilden. Die Tropfkantenkontur 54 ist bevorzugt eine geschlossene Kontur, also eine um die Unterseitenfläche 52 vollständig umlaufende Kontur.

Die Wellenbrecherkontur 46, die Tropfkantenkonturen 50 und 54 sowie und die Vertiefung 48 können entsprechend dazu beitragen, einen Fluidfluss (z. B. von Reinigungsflüssigkeit) aus dem Behälterbehandlungsraum B durch die Ausnehmung 38 zu verringern.

Der Dichtring 56 kann zwischen der Rotorplatte 18 und dem Tragrahmen 14 abdichten. Vorzugsweise kann der Dichtring 56 einen Spalt zwischen einer Unterseite der Rotorplatte 18 und dem Kragen 34 des Tragrahmens 14 abdichten.

Der Dichtring 56 kann bevorzugt in der Ausnehmung 38 angeordnet sein. Im Einzelnen kann der Dichtring 56 radial innen von dem Kragen 36 der Rotorplatte 18 und dem Schmierstoffkanal 26 des Tragrahmens 14 angeordnet sein. Bevorzugt kann der Dichtring 56 an einem oberen Ende des Kragens 34 des Tragrahmens 14 angeordnet und abgestützt sein.

Bevorzugt kann der Dichtring 56 eine Dichtlippe 58 aufweisen. Die Dichtlippe 58 kann eine Unterseite der Rotorplatte 18 kontaktieren. Vorzugsweise kann die Dichtlippe 58 die Bodenfläche 42 kontaktieren.

Vorzugsweise verlaufen der weitere Schmierstoffkanal 28 des Tragrahmens 14 und/oder der Kragen 34 des Tragrahmens 14 und/oder die Ausnehmung 38 der Rotorplatte 18 und/oder der Dichtring 56 koaxial bezüglich der Hauptdrehachse A der Rundläufer-Vorrichtung 10 (siehe Figur 1).

Das Entlüftungselement 60 kann in einem mit der Ausnehmung 38 verbundenen Durchgangsloch 62 der Rotorplatte 18 angeordnet sein. Beispielsweise kann das Entlüftungselement 60 in dem Durchgangsloch 62 lösbar befestigt, vorzugsweise eingeschraubt, sein. Beispielsweise kann das Entlüftungselement 60 eine Entlüftungsschraube sein.

Beispielsweise kann das Durchgangsloch 62 eine Oberseite der Rotorplatte 18 und die Ausnehmung 38 miteinander verbinden. Alternativ könnte das Durchgangsloch 62 bspw. eine Außenumfangseite der Rotorplatte 18 und die Ausnehmung 38 miteinander verbinden (nicht in Figur 2 dargestellt). Das Durchgangsloch 62 kann sich entsprechend einerseits in einer Oberseite oder Außenumfangsseite der Rotorplatte 18 öffnen.

Andererseits kann sich das Durchgangsloch 62 bevorzugt in einem Bereich der Ausnehmung 38 zwischen dem Kragen 34 des Tragrahmens 14 und dem Kragen 36 der Rotorplatte 18 öffnen. Beispielsweise kann sich das Durchgangsloch 62 in der Bodenfläche 42 öffnen (wie in Figur 2 dargestellt ist) oder in der Außenumfangsfläche 44 öffnen (nicht in Figur 2 dargestellt).

Sofern der Dichtring 56 umfasst ist, kann sich das Durchgangsloch 62 bevorzugt in einem Bereich der Ausnehmung 38 zwischen dem Dichtring 56 und dem Kragen 36 der Rotorplatte 18 öffnen, z. B. in der Bodenfläche 42 oder der Außenumfangsfläche 44.

Vorzugsweise kann mittels des Entlüftungselements 60 die Ausnehmung 38 entlüftet und damit ein Druck in der Ausnehmung 38 abgebaut werden. Entsprechend der bevorzugten Anordnung kann mittels des Entlüftungselements 60 der Bereich der Ausnehmung 38 zwischen dem Kragen 34 des Tragrahmens 14 / dem Dichtring 56 und dem Kragen 36 der Rotorplatte 18 entlüftet und damit ein etwaiger Überdruck in diesem Bereich abgebaut werden oder ein Unterdruck verhindert werden (z. B. Luft rein, Schmiermittel raus bzw. Schmiermittel rein und Luft raus).

Das Entlüftungselement 60 weist bevorzugt einen inneren Entlüftungskanal 64 zum Entlüften der Ausnehmung 38 auf. Durch den Entlüftungskanal 64 etwaig aus dem Schmierstoffraum S eindringender Schmierstoff kann durch die Ausnehmung 38 von oben in den Schmierstoffkanal 26 tropfen.

Bevorzugt sind mehrere Entlüftungselemente 60 umfasst. Die Entlüftungselemente 60 können in voneinander beabstandeten Durchgangslöchern 62 der Rotorplatte 18 angeordnet sein. Die Durchgangslöcher 62 können verteilt entlang eines Verlaufs der Ausnehmung 38 angeordnet sein.

Die Dichtbaugruppe 66 kann ein Hülsenteil 68 und eine Dichtschraube 74 aufweisen.

Das Hülsenteil 68 kann auf einer Oberseite der Rotorplatte 18 angeordnet sein und sich in einen Durchlass 70 der Rotorplatte 18 hineinerstrecken.

Beispielsweise kann der Durchlass 70 eine Oberseite der Rotorplatte 18 und die Ausnehmung 38 miteinander verbinden. Der Durchlass 70 kann sich bevorzugt von der Oberseite der Rotorplatte 18 zu der Ausnehmung 38 erstrecken. Vorzugsweise kann sich der Durchlass 70 in einem Bereich der Ausnehmung 38 zwischen der Innenumfangsfläche 40 und dem Kragen 34 des Tragrahmens 14 öffnen, z. B. in der Bodenfläche 42.

Sofern der Dichtring 56 umfasst ist, kann sich der Durchlass 70 bevorzugt in einem Bereich der Ausnehmung 38 zwischen der Innenumfangsfläche 40 und dem Dichtring 56 öffnen, z. B. in der Bodenfläche 42.

Bevorzugt kann das Hülsenteil 68 in dem Durchlass 70 lösbar befestigt, vorzugsweise eingeschraubt, sein. Vorzugsweise kann das Hülsenteil 68 abgedichtet zur Oberseite der Rotorplatte 18 sein. Beispielsweise kann ein Dichtring 72, z. B. O-Ring, zwischen der Oberseite der Rotorplatte 18 und dem Hülsenbauteil 68 abdichten.

Die Dichtschraube 74 kann lösbar in das Hülsenteil 68 eingeschraubt sein. Vorzugsweise kann die Dichtschraube 74 abgedichtet zum Hülsenteil 68 sein. Beispielsweise kann ein Dichtring 76, z. B. O-Ring, zwischen der Dichtschraube 74 und dem Hülsenteil 68 abdichten.

Bevorzugt sind mehrere Dichtbaugruppen 66 umfasst. Die Dichtbaugruppen 66 können an voneinander beabstandeten Durchlässen 70 der Rotorplatte 18 angeordnet sein. Die Durchlässe 70 können verteilt entlang eines Verlaufs der Ausnehmung 38 angeordnet sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Tragrahmens, des Schmierstoffkanals, der Aussparung, der Rotorplatte und/oder des Kragens des unabhängigen Anspruchs 1 offenbart und beanspruchbar. Alle Bereichsangaben hierin sind derart offenbart zu verstehen, dass gleichsam alle in den jeweiligen Bereich fallenden Werte einzeln offenbart und beanspruchbar sind, z. B. auch als jeweils bevorzugte engere Außengrenzen des jeweiligen Bereichs.

### Bezugszeichenliste

| | | | |
|---|---|---|---|
| 10 | Rundläufer-Vorrichtung | 48 | Vertiefung |
| 12 | Transportstern | 50 | Tropfkantenkontur |
| 14 | Tragrahmen | 52 | Unterseitenfläche |
| 16 | Aussparung | 54 | Tropfkantenkontur |
| 18 | Rotorplatte | 56 | Dichtring |
| 20 | Behälterhalter | 58 | Dichtlippe |
| 22 | Behandlungseinrichtung | 60 | Entlüftungselement |
| 24 | Dichtsystem | 62 | Durchgangsloch |
| 26 | Schmierstoffkanal | 64 | Entlüftungskanal |
| 28 | weiterer Schmierstoffkanal | 66 | Dichtbaugruppe |
| 30 | Wand | 68 | Hülsenteil |
| 32 | Schmierstoffablauf | 70 | Durchlass |
| 34 | Kragen | 72 | Dichtring |
| 36 | Kragen | 74 | Dichtschraube |
| 38 | Ausnehmung | 76 | Dichtring |
| 40 | Innenumfangsfläche | | |
| 42 | Bodenfläche | A | Hauptachse |
| 44 | Außenumfangsfläche | B | Behälterbehandlungsraum |
| 46 | Wellenbrecherkontur | S | Schmierstoffraum |

## Patentansprüche

1. Rundläufer-Vorrichtung (10), vorzugsweise Rundläufer-Verschließvorrichtung, bevorzugt Rundläufer-Dosenverschließvorrichtung, für eine Behälterbehandlungsanlage, wobei die Rundläufer-Vorrichtung (10) aufweist:
einen Tragrahmen (14), der eine Aussparung (16) und einen ringförmigen Schmierstoffkanal (26), der die Aussparung (16) umgibt, aufweist; und
eine Rotorplatte (18), die drehbar zum Tragrahmen (14) in der Aussparung (16) angeordnet ist und einen ringförmigen Kragen (36) aufweist, der von oben in den Schmierstoffkanal (26) eintaucht, vorzugsweise zum Abdichten eines Spalts zwischen der Rotorplatte (18) und dem Tragrahmen (14) mittels in dem Schmierstoffkanal (26) aufgenommenen Schmierstoffs.

2. Rundläufer-Vorrichtung (10) nach Anspruch 1, wobei mindestens eines erfüllt ist von:
der Kragen (36) der Rotorplatte (18) ist an einem Außenumfang der Rotorplatte (18) angeordnet; und
der Kragen (36) der Rotorplatte (18) ist an einer Unterseite der Rotorplatte (18) angeordnet.

3. Rundläufer-Vorrichtung (10) nach Anspruch 1 oder Anspruch 2, wobei mindestens eines erfüllt ist von:
der Tragrahmen (14) und die Rotorplatte (18) sind, vorzugsweise direkt, oberhalb oder unterhalb von einem Behälterbehandlungsraum (B) der Rundläufer-Vorrichtung (10) angeordnet; und
der Tragrahmen (14) und die Rotorplatte (18) sind Komponenten eines, vorzugsweise höhenverstellbaren, Oberteils oder Unterteils der Rundläufer-Vorrichtung (10).

4. Rundläufer-Vorrichtung (10) nach einem der vorherigen Ansprüche, wobei:
der Tragrahmen (14) einen Schmierstoffraum (S) zum Aufnehmen von Schmierstoffsprühnebel einhaust; und
der Schmierstoffraum (S) oberhalb von dem Schmierstoffkanal (26) angeordnet ist und sich bis hin zu dem Schmierstoffkanal (26) zum Zuführen des Schmierstoffs aus dem Schmierstoffraum (S) zu dem Schmierstoffkanal (26) erstreckt.

5. Rundläufer-Vorrichtung (10) nach einem der vorherigen Ansprüche, wobei:
der Tragrahmen (14) einen ringförmigen weiteren Schmierstoffkanal (28) aufweist, der den Schmierstoffkanal (26), vorzugsweise koaxial, umgibt und optional einen Einlass eines Schmierstoffablaufs (32) zum Abführen von Schmierstoff aus dem weiteren Schmierstoffkanal (28) aufweist; und
der weitere Schmierstoffkanal (28) und der Schmierstoffkanal (26) durch eine ringförmige Wand (30) voneinander getrennt sind, vorzugweise mit einer Wandhöhe ≥ 5 mm und/oder ≤ 20 mm, bevorzugt ca. 10 mm.

6. Rundläufer-Vorrichtung (10) nach einem der vorherigen Ansprüche, wobei:
die Rotorplatte (18) um eine Hauptdrehachse (A) der Rundläufer-Vorrichtung (10) drehbar ist; und
die Rotorplatte (18) mit Behandlungseinrichtungen (22) zum Behandeln der Behälter und/oder mit Behälterhaltern (20) verbunden ist zum Drehen der Behandlungseinrichtungen (22) und/oder der Behälterhalter (20) um die Hauptdrehachse (A) der Rundläufer-Vorrichtung (10),
wobei vorzugsweise:
die Behandlungseinrichtungen (22) Verschließwerkzeuge, besonders bevorzugt Bördelverschließwerkzeuge, aufweisen.

7. Rundläufer-Vorrichtung (10) nach einem der vorherigen Ansprüche, ferner aufweisend:
einen Dichtring (56), der radial innen von dem Kragen (36) der Rotorplatte (18) und/oder dem Schmierstoffkanal (26) des Tragrahmens (14) angeordnet ist und zwischen der Rotorplatte (18), vorzugsweise einer Unterseite der Rotorplatte (18), und dem Tragrahmen (14) abdichtet,
wobei vorzugsweise:
der Dichtring (56) eine Dichtlippe (58) aufweist, die die Rotorplatte (18) kontaktiert, vorzugsweise von unten; oder
der Dichtring (56) in der Rotorplatte (18) aufgenommen ist.

8. Rundläufer-Vorrichtung (10) nach einem der vorherigen Ansprüche, wobei:
die Rotorplatte (18) unterseitig eine ringförmige Ausnehmung (38) aufweist, wobei vorzugsweise die Ausnehmung (38) außenumfangsseitig von dem Kragen (36) der Rotorplatte (18) begrenzt ist; und
der Tragrahmen (14) einen ringförmigen Kragen (34) aufweist, der in die Ausnehmung (38) hineinragt und vorzugsweise den Schmierstoffkanal (26) innenumfangsseitig begrenzt.

9. Rundläufer-Vorrichtung (10) nach Anspruch 7 und Anspruch 8, wobei:
der Dichtring (56) in der Ausnehmung (38) angeordnet ist und zwischen der Rotorplatte (18) und dem Kragen (34) des Tragrahmens (14) abdichtet, und optional
der Dichtring (56) an einem oberen Ende des Kragens (34) des Tragrahmens (14) angeordnet und vorzugsweise abgestützt ist.

10. Rundläufer-Vorrichtung (10) nach Ansprüche 8 oder Anspruch 9, wobei mindestens eines erfüllt ist von:
eine Bodenfläche (42) der Ausnehmung (38) weist eine Tropfkantenkontur (50) zum Unterbrechen einer fliehkraftbedingten Tropfenbewegung radial nach außen auf;
eine Innenumfangsfläche (40) der Ausnehmung (38) weist eine Wellenbrecherkontur (46) zum Zurückwerfen von von unten in die Ausnehmung (38) eindringender Flüssigkeit auf;
ein Übergang zwischen einer Innenumfangsfläche (40) der Ausnehmung (38) und einer Bodenfläche (42) der Ausnehmung (38) weist eine Vertiefung (48) zum Verringern eines Kapillareffekts zwischen einer Innenumfangsfläche (40) der Ausnehmung (38) und dem Kragen (34) des Tragrahmens (14) auf; und
eine an die Ausnehmung (38) radial innen angrenzende Unterseitenfläche (52) der Rotorplatte (18) weist eine Tropfkantenkontur (54) zum Unterbrechen einer fliehkraftbedingten Tropfenbewegung radial nach außen zu der Ausnehmung (38) auf.

11. Rundläufer-Vorrichtung (10) nach einem der Ansprüche 8 bis 10, ferner aufweisend:
ein Entlüftungselement (60), vorzugsweise Entlüftungsschraube, das in einem mit der Ausnehmung (38) verbundenen Durchgangsloch (62) der Rotorplatte (18) zum Abbauen von Druck in der Ausnehmung (38) lösbar angeordnet ist,
wobei vorzugsweise ferner mindestens eines erfüllt ist von:
das Entlüftungselement (60) ist lösbar in dem Durchgangsloch (62) eingeschraubt;
das Durchgangsloch (62) öffnet sich in einem Bereich der Ausnehmung (38) zwischen dem Kragen (34) des Tragrahmens (14) und dem Kragen (36) der Rotorplatte (18); und
das Durchgangsloch (62) öffnet sich in einer Oberseite oder Außenumfangsseite der Rotorplatte (18).

12. Rundläufer-Vorrichtung (10) nach einem der Ansprüche 8 bis 11, ferner aufweisend:
eine Dichtbaugruppe (66) aufweisend ein Hülsenteil (68) und eine Dichtschraube (74),
wobei:
das Hülsenteil (68) auf einer Oberseite der Rotorplatte (18), vorzugsweise abgedichtet zu der Oberseite der Rotorplatte (18), angeordnet ist und sich in einen Durchlass (70) der Rotorplatte (18) hineinerstreckt, vorzugsweise eingeschraubt in den Durchlass (70);
der Durchlass (70) sich von der Oberseite der Rotorplatte (18) zu der Ausnehmung (38) erstreckt, vorzugsweise in einen Bereich der Ausnehmung (38) zwischen einer Innenumfangsfläche (40) der Ausnehmung (38) und dem Kragen (34) des Tragrahmens (14); und
die Dichtschraube (74) abgedichtet und lösbar in das Hülsenteil (68) eingeschraubt ist.

13. Verfahren zum Abdichten einer Rundläufer-Vorrichtung (10), vorzugsweise nach einem der vorherigen Ansprüche, oder einer Rundläufer-Verschließvorrichtung oder einer Rundläufer-Dosenverschließvorrichtung, wobei das Verfahren aufweist:
Blockieren eines Fluidpfads durch einen Spalt zwischen einer Rotorplatte (18) der Rundläufer-Vorrichtung (10) und einem Tragrahmen (14) der Rundläufer-Vorrichtung (10) mittels eines ringförmigen Kragens (36) der Rotorplatte (18), der in einen mit Schmierstoff gefüllten ringförmigen Schmierstoffkanal (26) des Tragrahmens (14) eintaucht.

14. Verfahren nach Anspruch 13, ferner aufweisend mindestens eines von:
Reinigen einer Unterseite der Rotorplatte (18) mit einem Reinigungsmedium, wobei ein Eindringen des Reinigungsmediums in einen von dem Tragrahmen (14) eingehausten Schmierstoffraum (S) mittels des blockierten Fluidpfads verhindert wird;
Nachfüllen, vorzugsweise kontinuierliches Nachfüllen, des Schmierstoffs in dem Schmierstoffkanal (26) aus einem Schmierstoffsprühnebel aus einem von dem Tragrahmen (14) eingehausten Schmierstoffraum (S), der oberhalb von dem Schmierstoffkanal (26) angeordnet ist und sich bis hin zu dem Schmierstoffkanal (26) erstreckt; und
Abdichten des Spalts mit einem Dichtring (56), vorzugsweise mit einer Dichtlippe (58) des Dichtrings (56) in Kontakt mit der Rotorplatte (18).

15. Verfahren nach Anspruch 13 oder Anspruch 14, wobei die Rotorplatte (18) unterseitig eine ringförmige Ausnehmung (38) aufweist, wobei vorzugsweise die Ausnehmung (38) außenumfangsseitig von dem ringförmigen Kragen (36) der Rotorplatte (18) begrenzt ist, und der Tragrahmen (14) einen ringförmigen Kragen (34) aufweist, der in die Ausnehmung (38) hineinragt und vorzugsweise den Schmierstoffkanal (26) innenumfangsseitig begrenzt, wobei das Verfahren ferner mindestens eines aufweist von:
Abbauen von Druck in der Ausnehmung (38) mittels eines Entlüftungselements (60), vorzugsweise einer Entlüftungsschraube;
Verringern eines Fluidflusses durch die Ausnehmung (38) mittels mindestens eines von:
- eine Tropfkantenkontur (50) an einer Bodenfläche (42) der Ausnehmung (38), die eine fliehkraftbedingte Tropfenbewegung radial nach außen unterbricht;
- eine Wellenbrecherkontur (46) an einer Innenumfangsfläche (40) der Ausnehmung (38), die von unten in die Ausnehmung (38) eindringende Flüssigkeit zurückwirft;
- eine Vertiefung (48) an einem Übergang zwischen einer Innenumfangsfläche (40) der Ausnehmung (38) und einer Bodenfläche (42) der Ausnehmung (38), die einen Kapillareffekt zwischen der Innenumfangsfläche (40) der Ausnehmung (38) und dem Kragen (34) des Tragrahmens (14) verringert; und
- eine Tropfkantenkontur (54) an einer an die Ausnehmung (38) radial innen angrenzenden Unterseitenfläche (52) der Rotorplatte (18), die eine fliehkraftbedingte Tropfenbewegung radial nach außen zu der Ausnehmung (38) unterbricht.
